# EUROPEAN PATENT APPLICATION

(11) **EP 2 068 584 A1**
(43) Date of publication of application: **10.06.2009**
(21) Application number: 07828936.0
(22) Date of filing: 01.10.2007
(51) Int. Cl.: H04Q 7/38, H04J 1/04, H04J 11/00

(54) **MOBILE STATION APPARATUS AND BASE STATION APPARATUS**

(30) Priority: 03.10.2006 JP 2006272345
(71) Applicant: NTT DoCoMo, Inc., Chiyoda-ku Tokyo 100-6150 (JP)
(72) Inventor: KISHIYAMA, Yoshihisa, Tokyo 100-6150 (JP); HIGUCHI, Kenichi, Tokyo 100-6150 (JP); SAWAHASHI, Mamoru, Tokyo 100-6150 (JP)
(74) Representative: HOFFMANN EITLE
(86) International application number: PCT/JP2007/069196
(87) International publication number: WO 2008/041674

(57) **Abstract**

One aspect of the present invention relates to a mobile station apparatus, including: a first time multiplexing unit configured to time multiplex an uplink CQI measurement pilot channel for measuring an uplink CQI and an uplink L1/L2 control channel; a second time multiplexing unit configured to time multiplex a shared data channel and a shared data channel demodulation reference signal for demodulating the shared data channel; and a TTI multiplexing unit configured to time multiplex a CQI measurement reference signal and a data transmission signal into different TTIs, the CQI measurement reference signal resulting from the time multiplexing of the uplink CQI measurement pilot channel and the uplink L1/L2 control channel, the data transmission signal resulting from the time multiplexing of the shared data channel and the shared data channel demodulation reference signal.

## Description

### TECHNICAL FIELD

The present invention relates to LTE (Long Term Evolution) systems and more particularly to base station apparatuses and mobile station apparatuses.

### BACKGROUND ART

LTE (Long Term Evolution) is discussed by standardization organization 3GPP for W-CDMA as a successor of the W-CDMA and HSDPA, and a radio access scheme is discussed where OFDMA (Orthogonal Frequency Division Multiple Access) is used in downlinks and SC-FDMA (Single-Carrier Frequency Division Multiple Access) is used in uplinks, as described in non-patent document 1 "3GPP TR 25.814 V7.0.0", for example.

In the OFDMA, a frequency band is divided into multiple smaller frequency bands (subcarriers), and data is transferred in each of the frequency bands. The subcarriers are densely arranged such that the subcarriers are partially overlapped but are not affected from interference by each other. According to the OFDMA, faster transmission can be achieved, and thus the frequency utilization efficiency can be improved.

In the SC-FDMA, a frequency band is divided into frequency bands, and the different frequency bands are used in transmissions for different terminals, which may lead to reduction in interference among the terminals. According to the SC-FDMA, transmission power has smaller variations, and thus the terminal can be arranged to include a relatively simpler transmitter.

### DISCLOSURE OF INVENTION

### [PROBLEM TO BE SOLVED BY THE INVENTION]

However, the above-mentioned prior art may have some problems as follows.

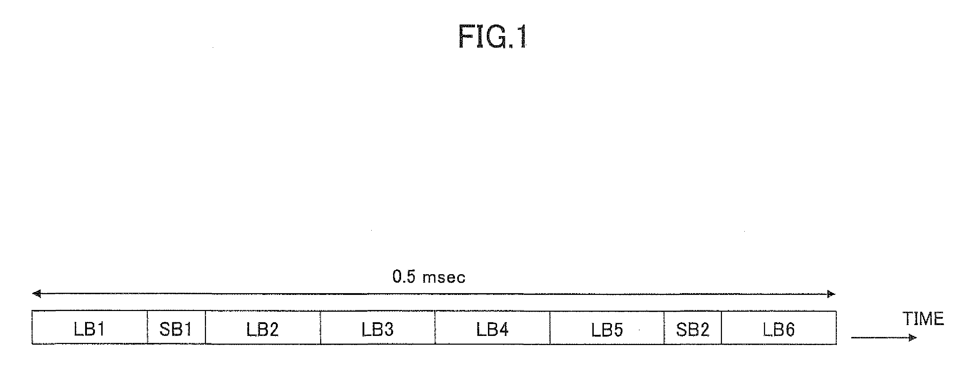

As illustrated in FIG. 1, it is assumed that two short blocks (SBs) and six long blocks (LBs) are used in each subframe for uplink transmission. The long blocks are mainly used to transmit data and control information. The two short blocks are used to transmit reference signals for CQI measurement and/or demodulation.

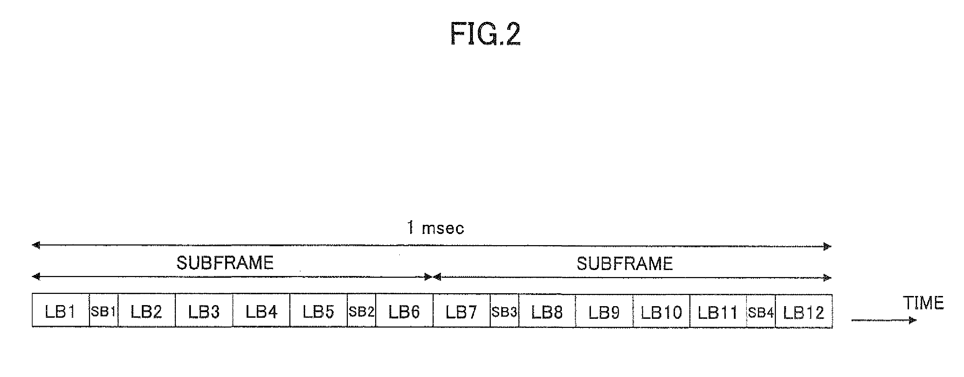

Since a single TTI consists of two subframes, the single TTI may consist of four short blocks and twelve long blocks, as illustrated in FIG. 2.

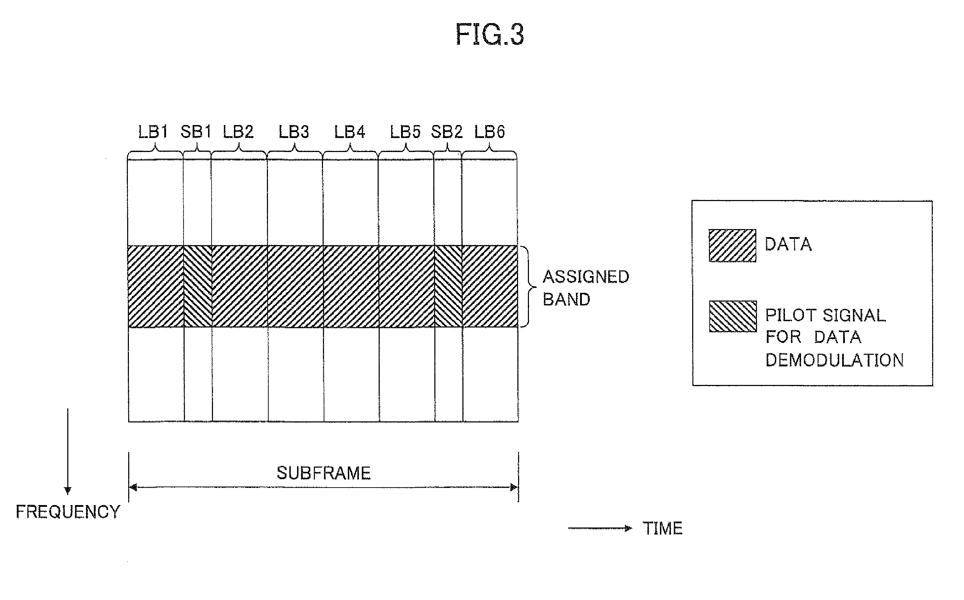

In this case, for example, as illustrated in FIG. 3, if a mobile station apparatus transmits data in the long blocks and pilot signals for data demodulation in the short blocks in a frequency band assigned by a base station apparatus, there would no longer be blocks to transmit reference signals for CQI measurement.

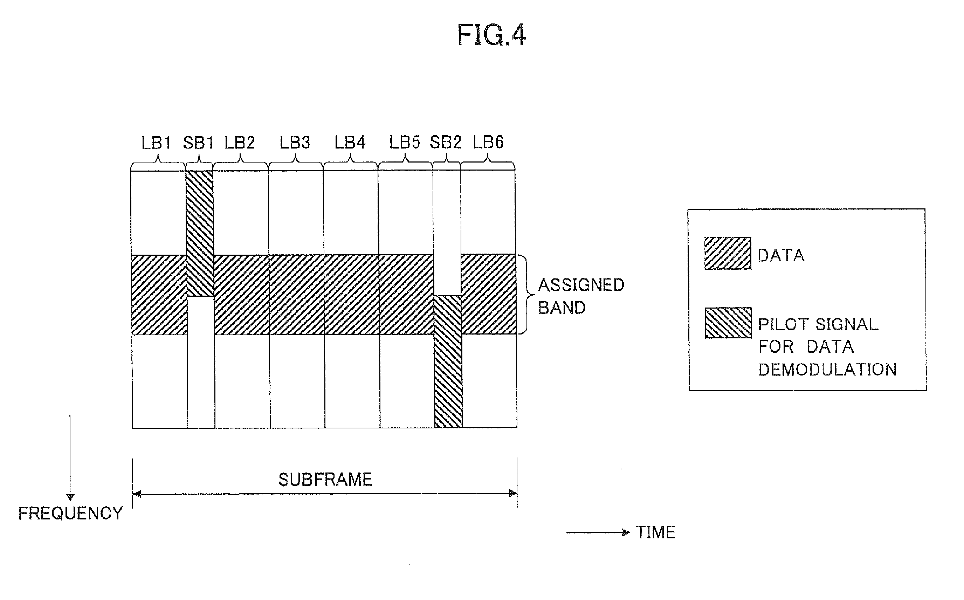

Also, for example, as illustrated in FIG. 4, although the mobile station apparatus can transmit data in the long blocks and reference signals for the CQI measurement in the short blocks in a frequency band assigned by the base station apparatus, there would no longer be blocks to transmit the pilot signals for the data demodulation.

Thus, the present invention is intended to overcome the above-mentioned problems. One object of the present invention is to provide a mobile station apparatus and a base station apparatus where CQI measurement pilot channels and data can be transmitted in different TTIs.

### [MEANS FOR SOLVING THE PROBLEM]

In order to overcome the above problem, one aspect of the present invention relates to a mobile station apparatus, including: a first time multiplexing unit configured to time multiplex an uplink CQI measurement pilot channel for measuring an uplink CQI and an uplink L1/L2 control channel; a second time multiplexing unit configured to time multiplex a shared data channel and a shared data channel demodulation reference signal for demodulating the shared data channel; and a TTI multiplexing unit configured to time multiplex a CQI measurement reference signal and a data transmission signal into different TTIs, the CQI measurement reference signal resulting from the time multiplexing of the uplink CQI measurement pilot channel and the uplink L1/L2 control channel, the data transmission signal resulting from the time multiplexing of the shared data channel and the shared data channel demodulation reference signal.

According to this configuration, TTIs different from TTIs for transmitting data channels can be used to transmit an uplink CQI measurement pilot channel for measuring an uplink CQI, a downlink CQI and scheduling request information as needed in uplinks.

Another aspect of the present invention relates to a base station apparatus, wherein a CQI measurement reference signal and a data transmission signal are time multiplexed into different TTIs and transmitted from a mobile station apparatus, the CQI measurement reference signal resulting from time multiplexing of an uplink CQI measurement pilot channel for measuring an uplink CQI and an uplink L1/L2 control channel, the data transmission signal resulting from time multiplexing of a shared data channel and a shared data channel demodulation reference signal for demodulating the shared data channel, the base station apparatus including: a demultiplexing unit configured to demultiplex a received signal into the CQI measurement reference signal and the data transmission signal; an uplink CQI measurement unit configured to measure an uplink CQI based on the resultant CQI measurement reference signal; a scheduler configured to perform link adaptation on an uplink data channel based on the measured uplink CQI and generate control information necessary for the link adaptation; and a control information transmission unit configured to transmit the control information.

According to this configuration, an uplink CQI measurement pilot channel transmitted from a user in a CQI measurement TTI can be used to measure a CQI in each resource block in an uplink. Link adaptation can be performed on an uplink data channel based on the measured CQI, and control information necessary for the link adaptation can be transmitted in a downlink.

### [ADVANTAGE OF THE INVENTION]

According to the embodiments of the present invention, a mobile station apparatus and a base station apparatus can be realized where CQI measurement pilot channels and data can be transmitted in different TTIs.

### BRIEF DESCRIPTION OF DRAWINGS

FIG. 1 illustrates an exemplary structure of a subframe;
FIG. 2 illustrates an exemplary structure of a single TTI;
FIG. 3 illustrates exemplary transmissions of data and pilot signals for data demodulation;
FIG. 4 illustrates exemplary transmissions of data and pilot signals for CQI measurement;
FIG. 5 is a block diagram partially illustrating a mobile station apparatus according to one embodiment of the present invention;
FIG. 6 illustrates an exemplary CQI measurement TTI in detail;
FIG. 7 illustrates exemplary transmission intervals assigned to a mobile station apparatus;
FIG. 8 illustrates exemplary transmission intervals assigned by a base station apparatus to mobile station apparatuses;
FIG. 9 illustrates exemplary multiplexing of a CQI measurement TTI for user 1 and a data transmission TTI for user 2;
FIG. 10 is a block diagram partially illustrating a base station apparatus according to one embodiment of the present invention;
FIG. 11 illustrates exemplary transmissions of L1/L2 control information;
FIG. 12 illustrates exemplary transmissions of L1/L2 control information according to one embodiment of the present invention;
FIG. 13 is a flow diagram illustrating an exemplary operation of a radio communication system according to one embodiment of the present invention; and
FIG. 14 illustrates exemplary transmissions of L1/L2 control information according to one embodiment of the present invention.

### LIST OF REFERENCE SYMBOLS

100: mobile station apparatus
102: downlink L1/L2 control channel reception unit
104: CQI measurement TTI generation unit
106, 112: channel encoding and spreading and data modulation unit
108, 114: long block and short block time multiplexing unit
110: data transmission TTI generation unit
116, 228: TTI multiplexing unit
200: base station apparatus
202: TTI demultiplexing unit
204: CQI measurement TTI reception unit
206: long block and short block time demultiplexing unit
208: channel estimation unit
210: uplink L1/L2 control channel demodulation unit
212: uplink CQI measurement unit
214: data transmission TTI reception unit
216: long block and short block time demultiplexing unit
218: channel estimation unit
220: shared data channel demodulation unit
222: scheduler
224, 226: channel encoding and spreading and data modulation unit
302: CQI measurement TTI.
304: data transmission TTI
402: primary L1/L2 control channel
404: data
406: secondary L1/L2 control channel

### BEST MODE FOR CARRYING OUT THE INVENTION

The best mode of implementing the present invention is described through the following embodiments with reference to the drawings.

Throughout all the drawings illustrating the embodiments, components and elements having the same function are referred to as the same reference symbols and are not described repeatedly.

A radio communication system is described to which a base station apparatus and a mobile station apparatus according to one embodiment of the present invention are applied.

In the radio communication system, radio access schemes OFDMA and SC-FDMA are applied to downlinks and uplinks, respectively. As mentioned above, the OFDMA is a transmission scheme where a frequency band is divided into multiple smaller frequency bands (subcarriers) and data is transmitted in each of the frequency bands. The SC-FDMA is a transmission scheme where a frequency band is divided into frequency bands and the divided different frequency bands are used by different terminals, resulting in reduction in interference among the terminals.

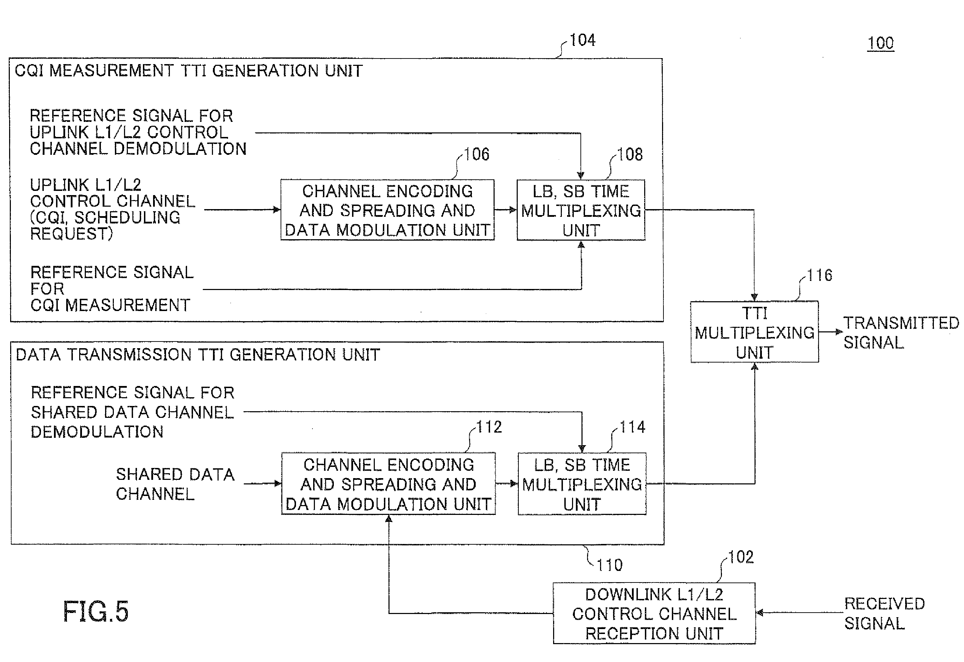

Next, a mobile station apparatus 100 according to one embodiment of the present invention is described with reference to FIG. 5.

The mobile station apparatus 100 includes a downlink L1/L2 control channel reception unit 102 for receiving transmission signals from a base station apparatus 200, a CQI measurement TTI generation unit 104, a data transmission TTI generation unit 110 and a TTI multiplexing unit 116.

The CQI measurement TTI generation unit 104 includes a channel encoding and spreading and data modulation unit 106 and a long block (LB) and short block (SB) time multiplexing unit 108. The data transmission TTI generation unit 110 includes a channel encoding and spreading and data modulation unit 112 and a long block (LB) and short block (SB) time multiplexing unit 114.

An uplink L1/L2 control channel is supplied to the channel encoding and spreading and data modulation unit 106. The uplink L1/L2 control channel includes a CQI for downlinks and a scheduling request as described below if needed.

The channel encoding and spreading and data modulation unit 106 performs channel encoding, spreading and data modulation operations on the supplied uplink L1/L2 control channel and supplies a resultant signal to the long block and short block time multiplexing unit 108.

A reference signal for uplink L1/L2 control channel demodulation and/or a reference signal for uplink CQI measurement are supplied to the long block and short block time multiplexing unit 108. The long block and short block time multiplexing unit 108 time-multiplexes an uplink L1/L2 control channel and a reference signal for uplink L1/L2 control channel demodulation in the supplied signal into long blocks and a reference signal for uplink CQI measurement in the supplied signal into short blocks to generate a CQI measurement signal and supplies the CQI measurement signal to the TTI multiplexing unit 116.

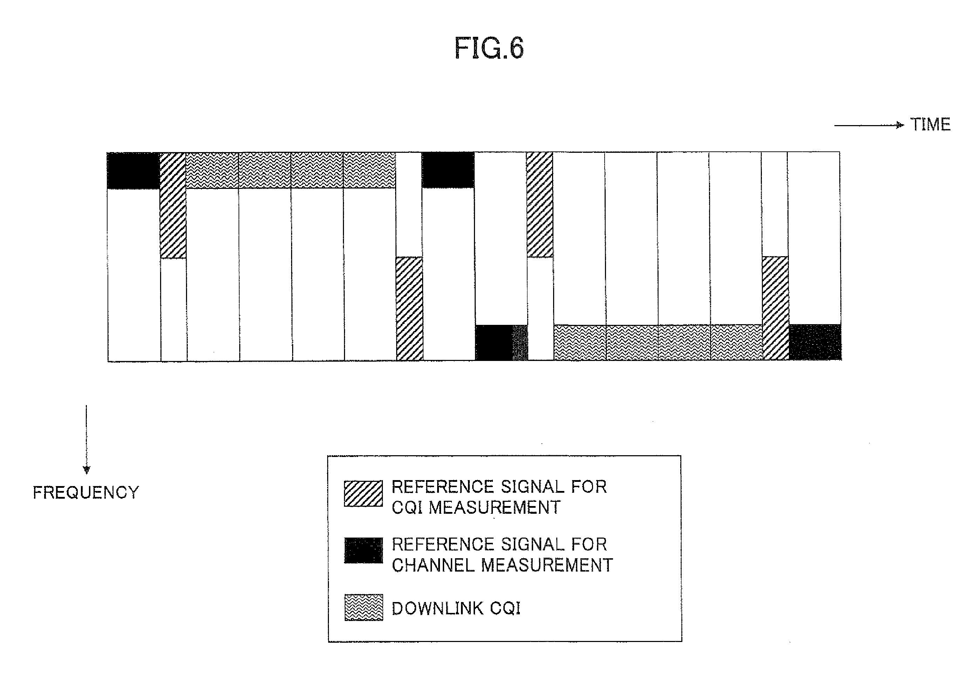

In FIG. 6, an exemplary CQI measurement TTI transmitted in a CQI measurement signal is illustrated. In this illustration, downlink CQIs and reference signals for channel measurement are assigned to long blocks at the same frequency. In this case, scheduling request information may be also assigned to the same long blocks as downlink CQIs. The scheduling request information used herein means information transmitted from the mobile station apparatus 100 to the base station apparatus 200 to synchronize the mobile station apparatus 100 with the base station apparatus 200. In the case of transmission of data from the mobile station apparatus 100, the mobile station apparatus 100 includes a scheduling request in the data, and thereby the base station apparatus 200 can achieve the synchronization based on the transmitted data. In intervals where the data is not transmitted from the mobile station apparatus 100, on the other hand, the base station apparatus 200 fails to achieve the synchronization among multiple users connected to the base station apparatus 200. In this case, the mobile station apparatus 100 transmits the scheduling request for the data prior to uplink data transmission, but if there is out-of-synchronization, resynchronization may be necessary for transmission of the scheduling request.

Also, although the reference signal for uplink CQI measurement is assigned to short blocks, frequency hopping may be applied. In other words, frequency carriers for transmissions of the short blocks are switched. Also, the assignment may be carried out in consideration of transmissions via two antennas.

As a result, the short blocks in the CQI measurement TTI are used to transmit reference signals for uplink CQI measurement (pilot channels for uplink CQI measurement), the long blocks in the CQI measurement are used to transmit downlink CQIs and scheduling request information as needed, and the long blocks in the CQI measurement TTI are used to transmit reference signals for channel measurement used to demodulate the downlink CQIs and the scheduling request information as needed, that is, pilot channels used for channel estimation.

On the other hand, shared data channels together with downlink L1/L2 control channels transmitted from the base station apparatus 200 and received at the downlink L1/L2 control channel reception unit 102 are supplied to the channel encoding and spreading and data modulation unit 112.

The channel encoding and spreading and data modulation unit 112 performs channel encoding, spreading and data modulation operations on the supplied shared data channels based on the supplied downlink L1/L2 control channel and supplies the resultant signals to the long block and short block time multiplexing unit 114.

For example, the channel encoding and spreading and data modulation unit 112 performs link adaptation on data channels to be transmitted depending on downlink control signaling from the base station apparatus 200, that is, depending on instruction of primary downlink L1/L2 control channels or secondary downlink L1/L2 control channels.

In other embodiments, the channel encoding and spreading and data modulation unit 112 may select a data modulation scheme and a channel coding rate that are different from those specified in the downlink control signaling. In this case, however, control channels attached to the data channels may be used to transmit that fact to the base station apparatus 200. For example, if the base station apparatus 200 assigns a wider band to the mobile station apparatus 100 but the mobile station apparatus 100 needs to transmit a smaller amount of data, or if the mobile station apparatus 200 receives a predefined number of NACKs from the base station apparatus 200, the channel encoding and spreading and data modulation unit 112 may select a data modulation scheme and a channel coding rate that are different from those specified in the downlink control signaling.

Reference signals for shared data channel demodulation are supplied to the long block and short block time multiplexing unit 114. The long block and short block time multiplexing unit 114 generates data communication signals by time-multiplexing shared data channels in incoming signals into long blocks and the reference signals for shared data channel demodulation in the incoming signals into short blocks and supplies the generated signals to the TTI multiplexing unit 116.

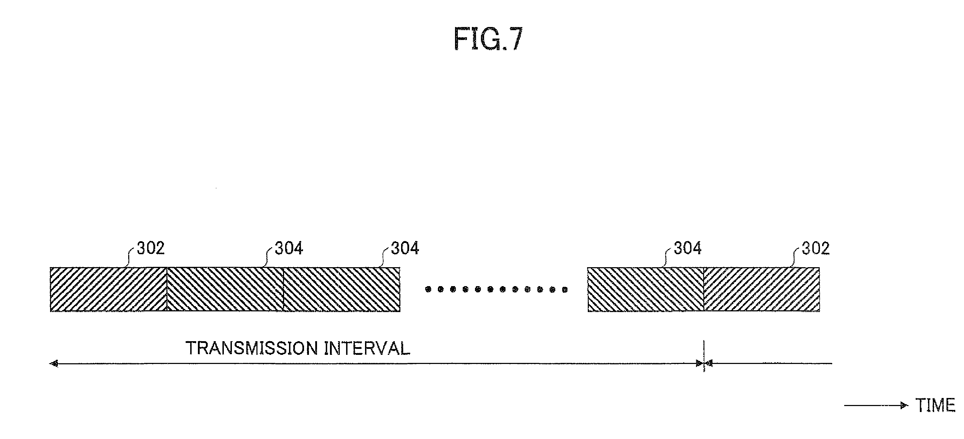

The TTI multiplexing unit 116 time-multiplexes and transmits CQI measurement signals supplied from the CQI measurement TTI generation unit 104 and data transmission signals supplied from the data transmission TTI generation unit 110. For example, as illustrated in FIG. 7, a CQI measurement TTI 302 for transmitting the CQI measurement signals is transmitted once in a transmission interval consisting of multiple TTIs. In other words, the CQI measurement TTI 302 is transmitted in the constant transmission interval for each user.

In this manner, the CQI measurement TTI different from data transmission TTIs 304 for transmitting data transmission signals is used to transmit pilot channels for uplink CQI measurement, downlink CQIs and scheduling request information as needed in uplinks.

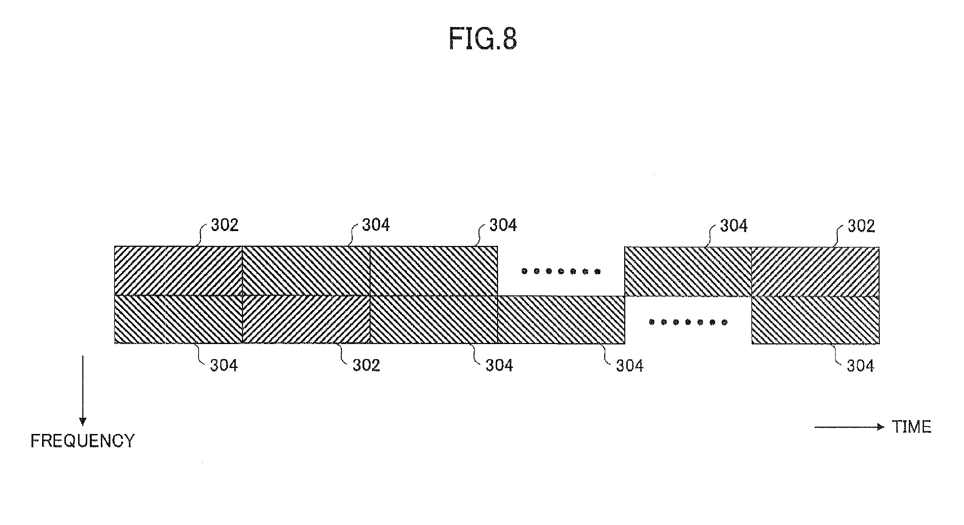

Also, the TTI multiplexing unit 116 transmits the CQI measurement TTI 302 at different timings for different users based on transmission timings assigned by the base station apparatus 200. In other words, as illustrated in FIG. 8, the base station apparatus 200 assigns the transmission timings of the CQI measurement TTI 302 in such a manner that the different transmission timings may be assigned to the different users. The base station apparatus 200 transmits the transmission timings of the CQI measurement TTI 302 in reply channels to random access channels or in reply channels to control messages for the random access channels. In FIG. 8, exemplary transmission timings of the CQI measurement TTI 302 and the data transmission TTI 304 to different users, two users in this illustration are illustrated.

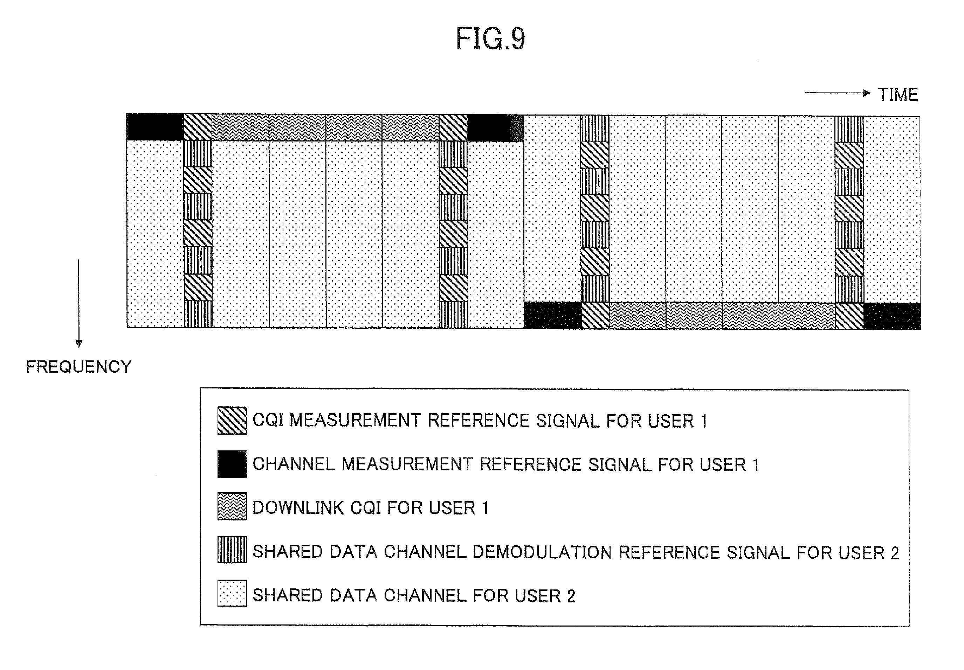

As a result, for example, as illustrated in FIG. 9, a distributed transmission type of FDMA (Frequency Division Multiple Access) for assigning subcarriers across a band in a distributed manner can be applied in short blocks to uplink CQI measurement reference signals for user 1 and shared data channel demodulation reference signals for user 2. In FIG. 9, exemplary multiplexing of the CQI measurement TTIs for user 1 and the data transmission TTIs for user 2 is illustrated.

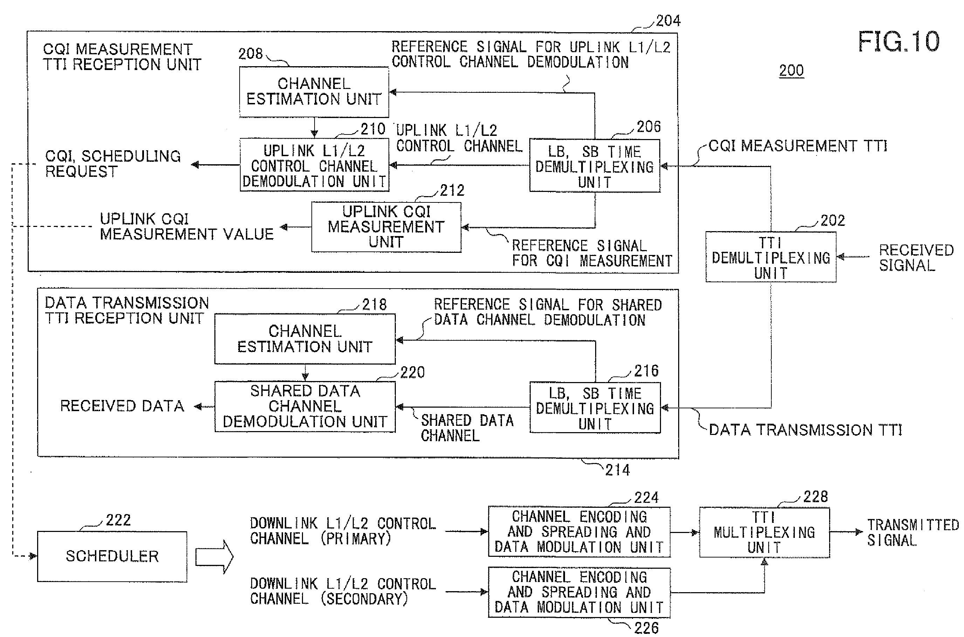

Next, the base station apparatus 200 according to one embodiment of the present invention is described with reference to FIG. 10.

The base station apparatus 200 includes a TTI demultiplexing unit 202 for receiving input signals, a CQI measurement TRI reception unit 204, a data transmission TTI reception unit 214, a scheduler 222, a channel encoding and spreading and data modulation unit 224 receiving a primary downlink L1/L2 control channel as described below (hereinafter referred to as a primary L1/L2 control channel), a channel encoding and spreading and data modulation unit 226 receiving a secondary downlink L1/L2 control channel (hereinafter referred to as a secondary L1/L2 control channel) and a TTI multiplexing unit 228.

The CQI measurement TTI reception unit 204 includes a long block and short block time demultiplexing unit 206, a channel estimation unit 208, an uplink L1/L2 control channel demodulation unit 210 and an uplink CQI measurement unit 212.

The data transmission TTI reception unit 214 includes a long block and short block time demultiplexing unit 216, a channel estimation unit 218 and a shared data channel demodulation unit 220.

Signals transmitted from the mobile station apparatus 100 are received at the base station apparatus 200 and supplied to the TTI demultiplexing unit 202. The TTO demultiplexing unit 202 demultiplexes the received signals into CQI measurement TTIs and data transmission TTIs.

The CQI measurement TTIs demultiplexed by the TTI demultiplexing unit 202 are supplied to the long block and short block time demultiplexing unit 206. The long block and short block time demultiplexing unit 206 demultiplexes the CQI measurement TTIs into reference signals for uplink L1/L2 control channel demodulation, uplink L1/L2 control channels, and reference signals for CQI measurement, which are supplied to the channel estimation unit 208, the uplink L1/L2 control channel demodulation unit 210, and the uplink CQI measurement unit 212, respectively.

The channel estimation unit 208 performs channel estimation based on the reference signals for uplink L1/L2 control channel demodulation and supplies results of the channel estimation to the uplink L1/L2 control channel demodulation unit 210.

The uplink L1/L2 control channel demodulation unit 210 demodulates the uplink L1/L2 control channels based on the results of the channel estimation supplied from the channel estimation unit 208. Also, the uplink L1/L2 control channel demodulation unit 210 supplies downlink CQIs and/or a scheduling request to the scheduler 222.

The uplink CQI measurement unit 212 measures uplink CQIs based on reference signals for uplink CQI measurement and supplies the measured uplink CQIs to the scheduler 222.

On the other hand, the data transmission TTIs demultiplexed by the TTI demultiplexing unit 202 are supplied to the long block and short block time demultiplexing unit 216. The long block and short block time demultiplexing unit 216 demultiplexes the data transmission TTIs into reference signals for shared data channel demodulation and shared data channels, which are supplied to the channel estimation unit 218 and the shared data channel demodulation unit 220, respectively.

The channel estimation unit 218 performs channel estimation based on the reference signals for shared data channel demodulation and supplies results of the channel estimation to the shared data channel demodulation unit 220.

The shared data channel demodulation unit 220 demodulates the shared data channels based on the results of the channel estimation supplied from the channel estimation unit 218 and supplies resultant data.

The scheduler 222 performs link adaptation on uplink data channels based on uplink CQIs and generates control information necessary for the link adaptation. The link adaptation used herein means control of frequency scheduling, transmission power, data modulation and channel coding rate to determine a frequency band and a bandwidth used by the mobile station apparatus 100.

The scheduler 222 generates a primary L1/L2 control channel as control signaling transmitted in a downlink to which the uplink CQI measurement result is first reflected. In this embodiment, the primary L1/L2 control channel may include a frequency band, a bandwidth, transmission power control, data modulation and channel coding rate used by the mobile station apparatus 100.

Also, if control signaling is performed in a time interval before uplink CQI measurement, the scheduler 222 generates a secondary L1/L2 control channel having a smaller amount of information than a primary L1/L2 control channel. For example, the scheduler 222 generates as the secondary L1/L2 control channel difference information indicative of a difference with respect to the primary L1/L2 control channel. For example, the scheduler 222 generates as the secondary L1/L2 control channel one-bit information indicative of ON/OFF. In this example, the secondary L1/L2 control channel being "1" indicates that a shared data channel is transmitted from the mobile station apparatus 100 under the same control whereas the secondary L1/L2 control channel being "0" indicates that no shared data channel is transmitted from the mobile station apparatus 100.

Also, the scheduler 222 controls transmission power of the primary L1/L2 control channels and the secondary L1/L2 control channels based on supplied downlink CQIs. Also, in response to receipt of a scheduling request, the scheduler 222 performs synchronization with the mobile station apparatus 100.

The primary downlink L1/L2 control channel is subjected to channel encoding, spreading and data modulation operations in the channel encoding and spreading and data modulation unit 224, and the operational result is supplied to the TTI multiplexing unit 228.

On the other hand, the secondary downlink L1/L2 control channel is subjected to channel encoding, spreading and data modulation operations in the channel encoding and spreading and data modulation unit 226, and the operational result is supplied to the TTI multiplexing unit 228.

The TTI multiplexing unit 228 time-multiplexes the primary downlink L1/L2 control channel and the secondary downlink L1/L2 control channel to generate a time-multiplexed signal and transmits the generated signal.

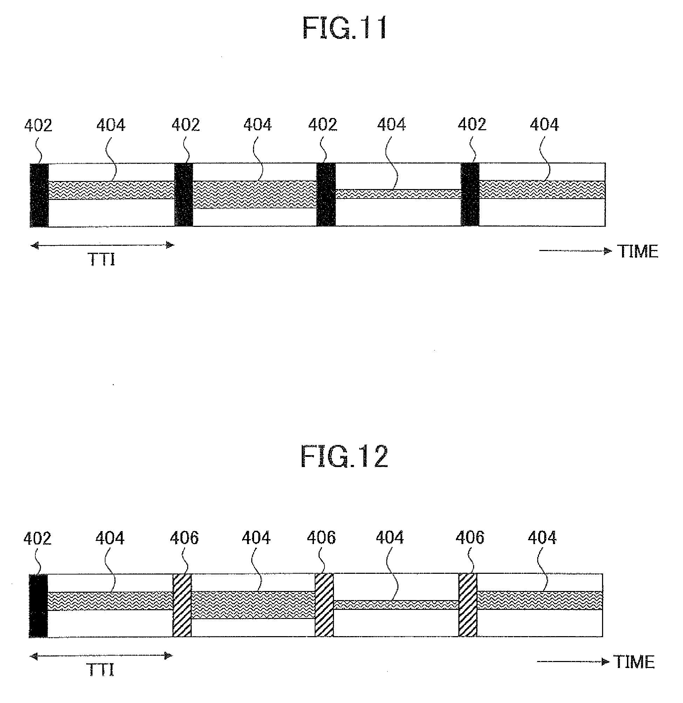

In cases of transmission of L1/L2 control information on a per-TTI basis, a conventional base station apparatus may transmit a new L1/L2 control channel 402 for each TTI as illustrated in FIG. 11. A mobile station apparatus would transmit a shared data channel 404 based on the L1/L2 control channel transmitted from the base station apparatus. In FIG. 11, the reference numeral "402" represents L1/L2 control channels transmitted from the base station apparatus 200, and the reference numeral "404" represents shared data channels transmitted from the mobile station apparatus 100.

In the base station apparatus 200 according to this embodiment, on the other hand, a new L1/L2 control channel, that is, the primary L1/L2 control channel 402, is transmitted in only the first TTI, and the secondary L1/L2 control channels 406, which include difference information with respect to the primary L1/L2 control channel 402 transmitted in the first TTI, are transmitted in subsequent TTIs, as illustrated in FIG. 12. The mobile station apparatus 100 transmits a shared data channel in the first TTI based on the primary L1/L2 control channel transmitted from the base station apparatus 200 and shared data channels in the subsequent TTIs based on the secondary L1/L2 control channels. In FIG. 12, the reference numeral "402" represents L1/L2 control information (primary L1/L2 control channel) transmitted from the base station apparatus 200, and the reference numeral "404" represents the shared data channel transmitted from the mobile station apparatus 100, and the reference numeral "406" represents the secondary L1/L2 control channel transmitted from the base station apparatus 200.

Since locations of assigned resource blocks and MCSs (modulation schemes and coding rates) are relatively highly correlated among successive TTIs, no problem may occur with the transmission of the difference information. In this manner, it is possible to reduce the number of bits in the L1/L2 control channel.

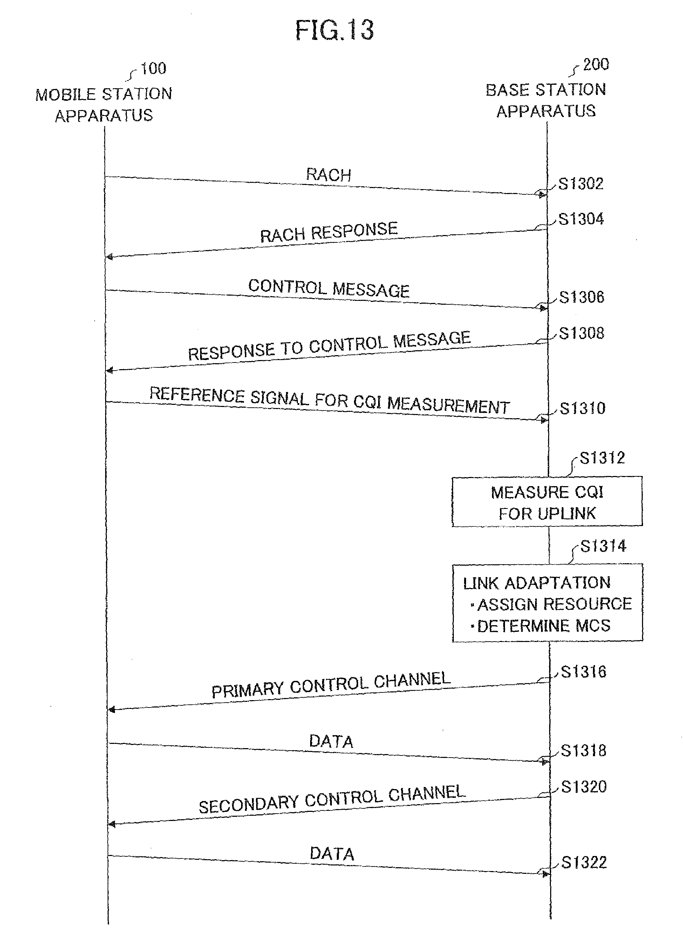

Next, an exemplary operation of a radio communication system is described with reference to FIG. 13 to which a base station apparatus and a mobile station apparatus according to this embodiment are applied.

At step S1302, the mobile station apparatus 100 transmits a random access channel (RACH).

At step S1304, the base station apparatus transmits a response to the RACH transmitted from the mobile station apparatus 100 (RACH response) to the mobile station apparatus 100.

At step S1306, the mobile station apparatus 100 transmits a control message to the base station apparatus 200.

At step S1308, the base station apparatus 200 transmits a response to the control message transmitted from the mobile station apparatus 100 (control message response) to the mobile station apparatus 100.

The base station apparatus 200 indicates a transmission timing for a CQI measurement TTI in the RACH response or the control message response.

At step S1310, the mobile station apparatus 100 uses a downlink common pilot signal to measure a downlink CQI and transmits a reference signal for uplink CQI measurement together with the downlink CQI in the above-mentioned CQI measurement TTI.

At step S1312, the base station apparatus 200 uses the uplink CQI measurement unit 212 to measure an uplink CQI based on the reference signal for uplink CQI measurement transmitted from the mobile station apparatus 100.

At step S1314, the base station apparatus 200 uses the scheduler 222 to perform link adaptation to generate control information necessary for the link adaptation. In this link adaptation, for example, resource assignment and determination of MCS may be performed.

The scheduler 222 generates a primary L1/L2 control channel as control signaling in a downlink to which the measured CQI is first reflected. At step S1316, the primary L1/L2 control channel is subjected to channel encoding, spreading and data modulation operations in the channel encoding and spreading and data modulation unit 224, and the operational result is supplied to the TTI multiplexing unit 228 for transmission.

The primary L1/L2 control channel is received at the downlink L1/L2 control channel reception unit 102 of the mobile station apparatus 100. The channel encoding and spreading and data modulation unit 112 performs channel encoding, spreading and data modulation operations on shared data channels based on control information in the primary L1/L2 control channel, that is, based on an assigned resource block and a determined MCS, and transmits the operational result.

The base station apparatus 200 performs channel estimation based on a reference signal for shared data channel demodulation included in a data transmission TTI. The shared data channel demodulation unit 220 demodulates the shared data channel based on the result of the channel estimation and supplies resultant data. Also, the scheduler 222 generates difference information indicative of a difference with respect to the primary L1/L2 control channel as a secondary L1/L2 control channel based on the result of the channel estimation. The secondary downlink L1/L2 control channel is subjected to channel encoding, spreading and data modulation operations in the channel encoding and spreading and data modulation unit 226, and the operational result is supplied to the TTI multiplexing unit 228 for transmission (step S1320).

The secondary L1/L2 control channel is received at the downlink L1/L2 control channel reception unit 102 of the mobile station apparatus 100. The channel encoding and spreading and data modulation unit 112 performs channel encoding, spreading and data modulation operations on shared data channels based on control information in the secondary L1/L2 control channel, that is, the difference information with respect to the primary L1/L2 control channel, and transmits the operation result (step S1322).

Since the mobile station apparatus 100 is in synchronization with the base station apparatus 200, the transmission cycle of the CQI measurement TTIs and the data transmission TTIs in uplinks match the transmission cycle of the primary L1/L2 control channels and the secondary L1/L2 control channels in downlinks.

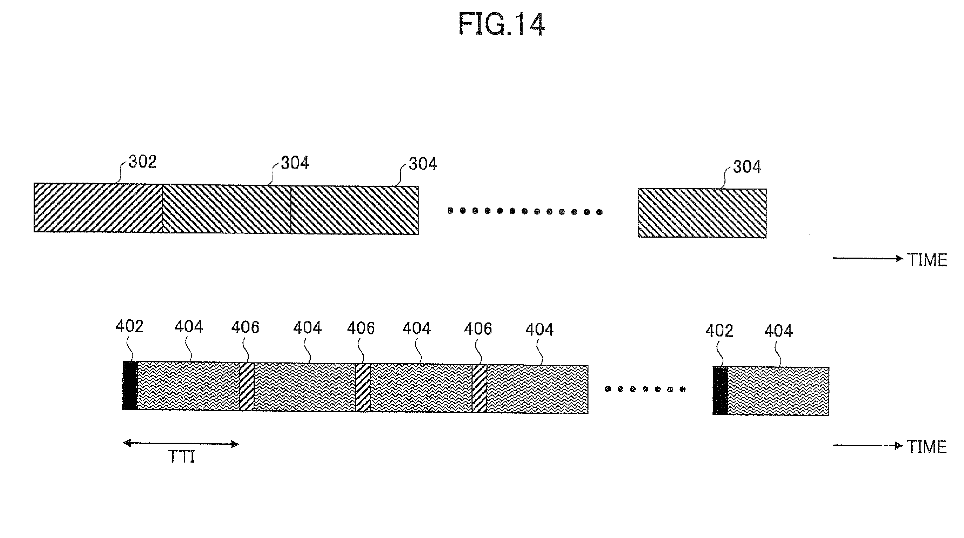

A specific example is described with reference to FIG. 14. FIG. 14 illustrates a CQI measurement TTI 302 and data transmission TTIs 304 transmitted from the mobile station apparatus 100, a primary L1/L2 control channel 402 and secondary L1/L2 control channels 406 transmitted from the base station apparatus 200, and shared data channels 404 received at the base station apparatus 200.

The mobile station apparatus 100 transmits a CQI measurement signal in the CQI measurement TTI 302. The base station apparatus 200 measures an uplink CQI based on a reference signal for uplink CQI measurement included in the CQI measurement signal. The base station apparatus 200 performs link adaptation based on the measured uplink CQI, generates the primary L1/L2 control channel 402 and transmits it to the mobile station apparatus 100.

Upon receipt of the primary L1/L2 control channel 402, the mobile station apparatus 100 performs link adaptation in accordance with indication of the primary L1/L2 control channel 402 and transmits the shared data channel 304.

The base station apparatus 200 receives the shared data channel 304 transmitted from the mobile station apparatus 100. The base station apparatus 200 uses a reference signal for shared data channel demodulation included in the shared data channel to perform channel estimation, demodulates the shared data channel based on the channel estimation, and supplies the resultant signal. Also, the base station apparatus 200 performs link adaptation based on the reference signal for shared data channel demodulation, generates the secondary L1/L2 control channel 406, and transmits the generated channel to the mobile station apparatus 100. Upon receipt of the primary L1/L2 control channel 402, the mobile station apparatus 100 performs link adaptation in accordance with indication of the primary L1/L2 control channel 402 and transmits the shared data channel 304.

According to the above-mentioned embodiments, the CQI measurement TTIs are separated from the data transmission TTIs, resulting in reduction in unnecessary consumption of radio resources.

Also, a base station apparatus transmits control information to a mobile station apparatus such that the control information is divided into the primary L1/L2 control channel and the secondary L1/L2 control channel, resulting in reduction in overhead involved in control signals.

For convenience, the present invention has been described with reference to the distinct embodiments, but separation of the embodiments is not essential to the present invention and two or more of the embodiments may be used together as needed. Some specific numerals have been used to facilitate understanding of the present invention, but unless otherwise noted, these numerals are simply illustrative and any other appropriate values may be used.

The present invention has been described with reference to the specific embodiments of the present invention, but the embodiments are simply illustrative and variations, modifications, alterations and substitutions could be contrived by those skilled in the art. For convenience of explanation, apparatuses according to the embodiments of the present invention have been described with reference to functional block diagrams, but these apparatuses may be implemented in hardware, software or combinations thereof. The present invention is not limited to the above embodiments, and variations, modifications, alterations and substitutions can be made by those skilled in the art without deviating from the spirit of the present invention.

This international patent application is based on Japanese Priority Application No. 2006-272345 filed on October 3, 2006, the entire contents of which are hereby incorporated by reference.

## Claims

1. A mobile station apparatus, comprising:
a first time multiplexing unit configured to time multiplex an uplink CQI measurement pilot channel for measuring an uplink CQI and an uplink L1/L2 control channel;
a second time multiplexing unit configured to time multiplex a shared data channel and a shared data channel demodulation reference signal for demodulating the shared data channel; and
a TTI multiplexing unit configured to time multiplex a CQI measurement reference signal and a data transmission signal into different TTIs, the CQI measurement reference signal resulting from the time multiplexing of the uplink CQI measurement pilot channel and the uplink L1/L2 control channel, the data transmission signal resulting from the time multiplexing of the shared data channel and the shared data channel demodulation reference signal.

2. The mobile station apparatus as claimed in claim 1, wherein
each TTI includes multiple long blocks and a short block, and
the first time multiplexing unit is configured to multiplex the uplink CQI measurement pilot channel into the short block and the uplink L1/L2 control channel into the long blocks.

3. The mobile station apparatus as claimed in claim 1, wherein the first time multiplexing unit is configured to multiplex a scheduling request into the long blocks.

4. The mobile station apparatus as claimed in claim 1, wherein the first time multiplexing unit is configured to multiplex an uplink L1/L2 control channel demodulation reference signal into the long blocks.

5. A base station apparatus, wherein a CQI measurement reference signal and a data transmission signal are time multiplexed into different TTIs and transmitted from a mobile station apparatus, the CQI measurement reference signal resulting from time multiplexing of an uplink CQI measurement pilot channel for measuring an uplink CQI and an uplink L1/L2 control channel, the data transmission signal resulting from time multiplexing of a shared data channel and a shared data channel demodulation reference signal for demodulating the shared data channel,
the base station apparatus comprising:
a demultiplexing unit configured to demultiplex a received signal into the CQI measurement reference signal and the data transmission signal;
an uplink CQI measurement unit configured to measure an uplink CQI based on the resultant CQI measurement reference signal;
a scheduler configured to perform link adaptation on an uplink data channel based on the measured uplink CQI and generate control information necessary for the link adaptation; and
a control information transmission unit configured to transmit the control information.

6. The base station apparatus as claimed in claim 5, wherein
a transmission interval is configured to include multiple TTIs, and
the scheduler is configured to generate first control information corresponding to a first TTI in the transmission interval and second control information corresponding to TTIs following the first TTI, the second control information being configured to include difference information with respect to the first control information.

7. The base station apparatus as claimed in claim 5, wherein the scheduler is configured to assign different transmission timings of the CQI measurement reference signal to different mobile station apparatuses.

8. The base station apparatus as claimed in claim 7, wherein the transmission timing of the CQI measurement reference signal is indicated in a response to a random access channel or a response to a control message of the random access channel.
